# EUROPÄISCHE PATENTSCHRIFT

(11) **EP 2 013 500 B1**
(45) Veröffentlichungstag und Bekanntmachung des Hinweises auf die Patenterteilung: **22.05.2013**
(21) Anmeldenummer: 07786715.8
(22) Anmeldetag: 16.03.2007
(51) Int. Cl.: F16C 39/06

(54) **FANGLAGER FÜR EINE ELEKTRISCHE MASCHINE**
RETAINER BEARING FOR AN ELECTRIC MACHINE, AND ELECTRIC MACHINE COMPRISING AT LEAST ONE SUCH RETAINER BEARING
PALIER D'ARRÊT POUR UNE MACHINE ÉLECTRIQUE ET MACHINE ÉLECTRIQUE POURVUE D'AU MOINS UN PALIER D'ARRÊT DE CE TYPE

(30) Priorität: 28.04.2006 DE 102006019873
(43) Veröffentlichungstag der Anmeldung: 14.01.2009
(73) Patentinhaber: Siemens Aktiengesellschaft, 80333 München (DE)
(72) Erfinder: PETEREIT, Peter, 12555 Berlin (DE); SCHUBERT, Gunnar, 10439 Berlin (DE); SIEGL, Günther, 13439 Berlin (DE); WALTER, Hartmut, 10961 Berlin (DE)
(86) Internationale Anmeldenummer: PCT/EP2007/052503
(87) Internationale Veröffentlichungsnummer: WO 2007/124982

(56) Entgegenhaltungen:
- EP-A1- 0 381 336
- DE-U1- 7 707 833
- GB-A- 547 306
- US-A1- 2003 063 826
- US-A1- 2004 189 124
- US-A1- 2004 240 759

## Beschreibung

Die Erfindung betrifft ein Fanglager zum Auffangen einer Rotorwelle einer elektrischen Maschine, wobei das Fanglager einen Lageraußenring und einen Lagerinnenring aufweist. Weiterhin betrifft die Erfindung eine elektrische Maschine, insbesondere eine Turbomaschine, mit zumindest einem derartigen Fanglager. Die elektrische Maschine weist zur betriebsmäßigen Lagerung der Rotorwelle insbesondere Magnetlager auf.

Elektrische Maschinen, insbesondere rotierende Elektromotoren sowie Generatoren, benötigen Lager zur Lagerung der Rotorwelle. Üblicherweise werden hierzu Wälzlager, wie Kugel- oder Rollenlager, verwendet.

Solche Lager sind für elektrische Großmaschinen, also z.B. Maschinen mit einer Masse von mehr als einer Tonne und einer elektrischen Nennleistung von mehr als 500 kW, insbesondere von mehreren Megawatt, nicht mehr vorteilhaft. Dies trifft insbesondere auf elektrische Maschinen zu, die eine maximale Drehzahl von mehr als 4000 U/min aufweisen, wie dies z.B. bei Kompressoren oder Pumpen der Fall ist. Grund dafür ist der mit zunehmender Drehzahl der elektrischen Maschine überproportional zunehmende Verschleiß der Wälzlager. Ein regelmäßiger Austausch der Wälzlager sowie eine Stilllegung der elektrischen Maschine und der damit verbundenen Anlagenteile ist die Folge.

Ein weiterer Nachteil der Wälzlager ist, dass die Wälzlager regelmäßig geölt bzw. geschmiert werden müssen. In Naturschutz- oder Wasserschutzgebieten hat dies zur Folge, dass zum Antrieb von Kompressoren, Pumpen oder dergleichen elektrische Maschinen mit Wälzlagern nur unter strengen Umweltauflagen betrieben werden dürfen.

Zur Lösung der oben genannten Probleme werden aktive Magnetlager anstelle von Wälzlagern verwendet. Solche Lager vermeiden die Nachteile der Wälzlager wie Reibung, schlechte Dämpfung und Verschleiß. Durch die kontinuierlichen Fortschritte auf dem Gebiet der Computer- und Regeltechnik sowie der Leistungselektronik sind derartige aktive magnetische Lager bezüglich der Regelung hochdynamisch und sehr stabil. Es ist eine berührungslose, verschleißfreie und stabile Lagerung bei sehr hohen Umdrehungszahlen möglich. Ein weiterer Vorteil ist, dass die Steifigkeit und die Dämpfung des aktiven magnetischen Lagers elektronisch eingestellt werden können. Durch den Wegfall der sonst erforderlichen Schmierung sind aktive magnetische Lager öl- und fettfrei und daher besonders in umweltsensitiven Anwendungsgebieten einsetzbar. Im betriebsmäßigen Einsatz wird ein Luftspalt im Bereich von 0,1 mm bis 0,5 mm zwischen dem magnetischen Lager und der zu lagernden Rotorwelle aufrecht erhalten.

Da systembedingt ein aktives magnetisches Lager ausfallen kann, sind Fanglager vorzusehen, welche die Rotorwelle bei Ausfall des Magnetlagers oder generell beim Abschalten der elektrischen Anlage aufnehmen können. Das Fanglager weist hierzu einen im Vergleich zum Rotorwellendurchmesser geringfügig größeren Innendurchmesser auf, so dass die Rotorwelle im Falle der betriebsmäßigen Magnetlagerung das Fanglager nicht berührt. Üblicherweise ist das Fanglager im Bereich des jeweiligen Rotorwellenendes im Ständergehäuse der elektrischen Maschine untergebracht. Ist die Rotorwelle dagegen als Hohlwelle ausgebildet, so ist der Außendurchmesser des Fanglagers geringfügig kleiner als der Innendurchmesser der Hohlwelle, so dass die Rotorwelle an ihrer Innenseite aufgefangen werden kann.

Bei Ausfall eines magnetischen Lagers fällt die Rotorwelle in das Fanglager. Dabei besteht die Gefahr, dass der Rotor in einen sogenannten "Backward Whirl" gerät und sich entlang der Innenfläche des Fanglagers abrollt. Im Gegensatz zur drehsynchronen Rotorbewegung, bei der die Rotorauslenkung synchron mit der umlaufenden Unwuchterregung erfolgt, durchläuft beim Backward Whirl der Rotor den Orbit in umgekehrter Richtung zur Rotordrehung mit sehr großer Amplitude. Dabei überlagert sich ein drehsynchroner Anteil mit sehr viel kleinerer Amplitude, so dass sich ein ellipsenförmiger Orbit ergibt. Dies hat zur Folge, dass sehr große Kräfte auf Rotor und Stator wirken, welche die Maschine in kürzester Zeit zerstören können.

Die Gefahr des Backward Whirl steigt mit zunehmendem Gleitreibwert zwischen Rotorwelle und Fanglager. Durch den Einsatz von Wälzlagern lässt sich die Gefahr aufgrund des sehr geringen Rollreibwerts weitestgehend vermeiden.

Jedoch sind Wälzlager nicht geeignet, in einem Störfall große und schwere Rotoren aufzufangen, da zwischen Wälzkörpern und Lagerringen im Fall von Kugellagern nur ein Punktkontakt und im Fall von Rollenlagern nur ein Linienkontakt mit daraus folgenden sehr hohen Flächenpressungen vorhanden ist. Diese hohen Belastungen können die Wälzlager beschädigen und das Lager blockieren.

Aus diesem Grund werden für große und schwere Rotoren gegenwärtig Trockenreiblager als Fanglager eingesetzt. Bei Trockenreiblagern findet der Reibkontakt direkt zwischen der rotierenden Rotorwelle und der Reibschicht des Trockenreiblagers statt. Durch geeignete Werkstoffauswahl, wie z.B. durch Verwendung spezieller Bronzelegierungen für die Reibschicht, ist eine weitestgehende Vermeidung eines Backward Whirl möglich.

Nachteilig an dieser Lösung ist, dass es insbesondere im ersten Aufprall der Rotorwelle im Fanglager zu hohen Flächenpressungen kommt. Grund dafür ist der unterschiedliche Durchmesser des Trockenreiblagers und der Rotorwelle. Hinzu kommt die gleichzeitig wirkende volle Reibgeschwindigkeit im Kontaktbereich. Diese extreme Belastung führt dazu, dass die vornehmlich aus einer Bronzelegierung bestehende Reibfläche beim Auslauf der Rotorwelle im Fanglager abgeschmolzen und auf der Rotorwelle ablagert wird. Diese bedingt eine mechanische Überarbeitung der Rotorwelle nach wenigen Ausläufen der Rotorwelle im Fanglager. Darüber hinaus ist ein Abschalten der elektrischen Maschine sowie der damit verbundenen Anlagenteile erforderlich.

Aus der gattungsgemäßen US 2004/240759 A1 ist ein Fanglager zum Auffangen einer Rotorwelle einer elektrischen Maschine bekannt. Das Fanglager weist einen Lageraußenring auf. Zwischen Lageraußenring und Rotorwelle sind Gleitelemente eingebracht, welche in radialer Richtung des Fanglagers vorgespannt sind.

Aus der EP 0 381 336 A1 ist ein Gleitlager bekannt, welches einen Lageraußenring, einen Lagerinnenring und einen Gleitring aufweist. Der Gleitring ist zwischen dem Lageraußenring und dem Lagerinnenring angeordnet. Er gleitet sowohl relativ zum Lageraußenring als auch relativ zum Lagerinnenring. Der Lagerinnenring, der Lageraußenring und der Gleitring bestehen aus Keramik.

Aus der US 2004/063 826 A1 ist ein Gleitlager bekannt, das einen Lageraußenring und einen Lagerinnenring aufweist. Der Lagerinnenring gleitet im Lageraußenring.

Es ist eine Aufgabe der Erfindung, ein Fanglager anzugeben, welches eine Vielzahl von Ausläufen der Rotorwelle im Fanglager ermöglicht.

Eine weitere Aufgabe der Erfindung ist es, eine geeignete elektrische Maschine mit zumindest einem derartigen Fanglager anzugeben.

Diese Aufgabe wird durch ein Fanglager zum Auffangen einer Rotorwelle gemäß Anspruch 1 gelöst. Vorteilhafte Ausführungsformen sind in den abhängigen Ansprüchen 2 bis 10 angegeben. Im Anspruch 11 ist eine geeignete elektrische Maschine angegeben. Vorteilhafte Ausführungsformen der elektrischen Maschine sind in den Ansprüchen 12 bis 14 enthalten.

Erfindungsgemäß ist zwischen Lageraußen- und Lagerinnenring zumindest ein Gleitelement eingebracht, welches in radialer Richtung des Fanglagers vorgespannt ist. Das Gleitelement kann auch als Gleitpad bezeichnet werden. Der Lageraußenring und der Lagerinnenring sind aus Stahl gefertigt. Die Innenfläche des Lageraußenrings und eine anliegende äußere Reibfläche des zumindest einen Gleitelements sind so beschaffen, dass eine Gleitreibungszahl im Bereich von 0,05 bis 0,15 resultiert. Alternativ sind die Außenfläche des Lagerinnenrings und eine anliegende innere Reibfläche des zumindest einen Gleitelements so beschaffen, dass eine Gleitreibungszahl im Bereich von 0,05 bis 0,15 resultiert.

Gleitreibungszahlen im zuvor genannten Bereich reduzieren das Risiko eines Backward Whirl in erheblichem Maße. Sie können durch geeignete Werkstoffauswahl des Lageraußenrings bzw. des Lagerinnenrings und der Gleitelemente erreicht werden.

Durch die praktisch spielfreie Anordnung des Lageraußen- bzw. Lagerinnenrings und des zumindest einen Gleitelements ergibt sich eine sehr große Kontaktfläche für die aufeinander gleitenden Teile und damit eine geringe Flächenpressung.

Bei Ausfall eines Magnetlagers fällt die Rotorwelle im erfindungsgemäßen Fanglager ab und rollt darin ab. Der in sehr kurzer Zeit in Rotation versetzte Innenring dreht sich so unter der Rotorwelle weg, dass diese selbst nur geringe Ausgleichsbewegungen im Fanglager ausführt.

Das erfindungsgemäße Fanglager kombiniert in vorteilhafter Weise geringe Reibwerte mit hoher Tragfähigkeit. Beim Auslauf der Welle im Fanglager stellt sich zwischen Rotorwelle und Lagerinnenring ein Rollkontakt mit sehr kleinen Reibwerten ein. Der eigentliche Reibkontakt finden zwischen Lagerinnenring und dem zumindest einen Gleitelement bzw. zwischen Lageraußenring und dem zumindest einen Gleitelement statt.

Die Rotorwelle wird beim Auftreffen durch den verschleißarmen Rollkontakt zwischen Rotorwelle und Innenring und beim Auslaufen im Fanglager praktisch nicht beschädigt. Eine Beeinträchtigung der Rotorwelle durch Materialablagerung findet nicht statt. Die Rotorwelle kann daher eine Vielzahl von Ausläufen im Fanglager überstehen.

In einer besonderen Ausführungsform sind radial wirkende Federelemente zwischen dem zumindest einen Gleitelement und dem Lageraußen- bzw. Lagerinnenring zur Aufbringung der Vorspannung eingebracht. Mittels der Federelemente kann die radial wirkende Vorspannkraft genau eingestellt werden.

Vorzugsweise weist das zumindest eine Gleitelement eine oder mehrere Federkammern zur Aufnahme je eines Federelements auf. Dadurch lässt sich das jeweilige Federelement in der Federkammer platzsparend arretieren.

Gemäß einer weiteren Ausführungsform ist das Federelement eine Tellerfeder. Solche Federn weisen eine besonders kompakte Bauform auf.

In einer besonders vorteilhaften Ausführungsform ist eine Vielzahl von Gleitelementen in Form von Ringsegmenten zwischen dem Lageraußen- und dem Lagerinnenring des Fanglagers eingebracht. Der Vorteil anstelle eines durchgehenden Gleitrings als Gleitelement ist es, dass nur solche Gleitelemente oder Gleitsegmente ausgetauscht werden müssen, deren Reibfläche bereits abgetragen ist. Dies erhöht in vorteilhafter Weise die Wirtschaftlichkeit eines solchen Fanglagers.

Ein weiterer Vorteil ist, dass jedes einzelne Gleitsegment einen eventuellen Abtrag der Reib- oder Gleitschicht durch eine radiale Zustellbewegung mittels der Vorspannung unabhängig von den benachbarten Gleitsegmenten ausgleichen kann.

Ist das zumindest eine Gleitelement aus Stahl gefertigt, so weist dieses gleichfalls eine hohe mechanische Festigkeit auf. Ist alternativ das zumindest eine Gleitelement aus einer insbesondere hochtemperaturbeständigen Keramik hergestellt, so kann das Gleitelement vorteilhaft eine größere Wärmemenge aufnehmen, welche durch die Reibung beim Auslaufen der Rotorwelle entsteht.

In einer besonders vorteilhaften Ausführungsform ist eine Gleitschicht auf die äußere Reibfläche des zumindest einen Gleitelements und/oder auf die Innenfläche des Lageraußenrings aufgebracht. Eine solche Gleitschicht kann auf elektrochemischem Wege aufgebracht werden. Alternativ kann eine solche Gleitschicht mittels eines Plattierverfahrens oder mittels eines Klebeverfahrens aufgebracht werden. Auf diese Weise kann die Gleitreibungszahl im Bereich von 0,05 bis 0,15 genau eingestellt werden.

In einer besonders vorteilhaften Ausführungsform ist eine Gleitschicht auf die innere Reibfläche des zumindest einen Gleitelements und/oder auf die Außenfläche des Lagerinnenrings aufgebracht. Eine solche Gleitschicht kann, wie zuvor beschrieben, auf elektrochemischem Wege, mittels eines Plattierverfahrens oder mittels eines Klebeverfahrens aufgebracht werden. Auf diese Weise kann die Gleitreibungszahl im Bereich von 0,05 bis 0,15 genau eingestellt werden.

In einer weiteren Ausführungsform sind die Innenfläche des Lagerinnenrings und die Außenfläche der aufzunehmenden Rotorwelle der elektrischen Maschine so beschaffen, dass im Auffangfall eine Haftreibungszahl von zumindest 0,4 resultiert. Dadurch wird vorteilhaft nach dem Aufprall der Rotorwelle im Fanglager der Innenring in Rotation versetzt, wobei sich der Lagerinnenring bereits nach sehr kurzer Zeit unter der Rotorwelle wegdreht. Vorzugsweise sind die Innenfläche des Lagerinnenrings sowie die Außenfläche der Rotorwelle aus gehärtetem Stahl gefertigt, so dass der Lagerinnenring sowie die Rotorwelle praktisch nicht beschädigt werden.

Die Gleitschicht wird bei beim ersten Aufprall der Rotorwelle im Fanglager nur auf Druck belastet, da der Lagerinnenring zu diesem Zeitpunkt gerade noch stillsteht. Erst wenn der erste Aufprallstoß vorüber ist, beginnt der Lagerinnenring aufgrund der relativ hohen Haftreibung zwischen Rotorwelle und Lagerinnenring zu rotieren und über die Gleitschicht zu reiben. Diese zeitliche Trennung von Stoßbelastung und großer Reibgeschwindigkeit schont die Gleitschicht.

In einer besonderen Ausführungsform ist das Fanglager als Trockenreiblager und somit in vorteilhafter Weise öl- und fettfrei ausgeführt.

Die Aufgabe wird weiterhin durch eine elektrische Maschine, insbesondere durch eine Turbomaschine, mit zumindest einem erfindungsgemäßen Fanglager gelöst. Mittels des erfindungsgemäßen Fanglagers kann vielfach die Rotorwelle im Fanglager aufgefangen werden, ohne dass eine mechanische Überarbeitung der Rotorwelle erforderlich wird. Die elektrische Maschine ist somit vorteilhaft länger verfügbar. Die Ausfallzeiten reduzieren sich.

Im Besonderen weist die elektrische Maschine zumindest ein Magnetlager zur vorteilhaft verschleißfreien betriebsmäßigen Lagerung der Rotorwelle, wie eingangs beschrieben, auf.

Die elektrische Maschine ist insbesondere ein Elektromotor oder Generator mit einer elektrischen Nennleistung von mindestens 500 kW.

Weitere vorteilhafte Eigenschaften der Erfindung ergeben sich aus deren beispielhafter Erläuterung anhand der Figuren. Es zeigt
- FIG 1: einen Ausschnitt eines Querschnitts durch eine elektrische Maschine mit einem Magnetlager und einem Fanglager zum Auffangen einer Rotorwelle gemäß der Erfindung,
- FIG 2: eine perspektivische Ansicht des Fanglagers mit beispielhaft 12 Gleitelementen in Form von Ringsegmenten zwischen einem Lageraußenring und einem Lagerinnenring und
- FIG 3: eine perspektivische Ansicht eines Querschnitts durch das in FIG 2 gezeigte Fanglager entlang der Schnittlinie III im Detail.

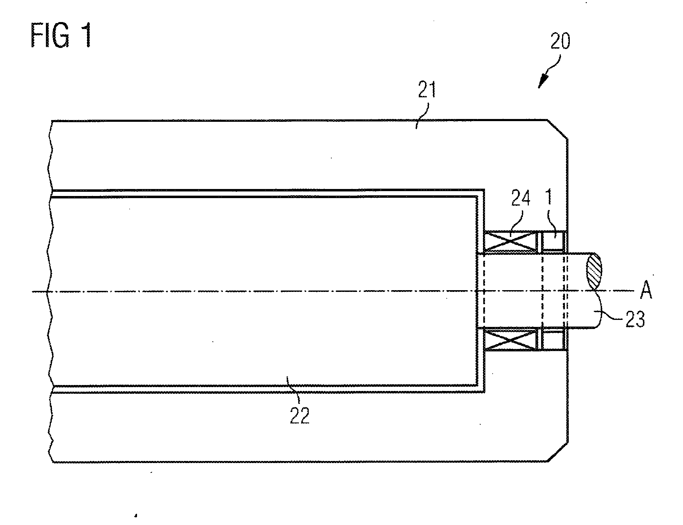

FIG 1 zeigt einen Ausschnitt eines Querschnitts durch eine elektrische Maschine 20 mit einem Magnetlager 24 und einem Fanglager 1 zum Auffangen einer Rotorwelle 23 gemäß der Erfindung. Mit dem Bezugszeichen A ist die Drehachse der elektrischen Maschine, mit dem Bezugszeichen 21 das Stator- oder Ständergehäuse der elektrischen Maschine 20 bezeichnet. Bei der gezeigten rotierenden elektrischen Maschine 20 kann es sich um einen Elektromotor oder um einen Generator handeln. Die elektrische Maschine 20 weist vorzugsweise eine Dauernennleistung von mindestens 500 kW auf. Sie kann als Turbomaschine ausgebildet sein. Das Magnetlager 24 dient der betriebsmäßigen Lagerung der Rotorwelle 23. Das Fanglager 1 dient dem Auffangen der Rotorwelle 23 beim Abschalten oder beim Ausfall des Magnetlagers 1.

In der vorliegenden FIG 1 sind sowohl das Magnetlager 24 als auch das Fanglager 1 im Stator- oder Ständergehäuse 21 der elektrischen Maschine 20 untergebracht. Vorzugsweise ist der Außenlagerring des Fanglagers 1 dort dämpfend und federnd befestigt.

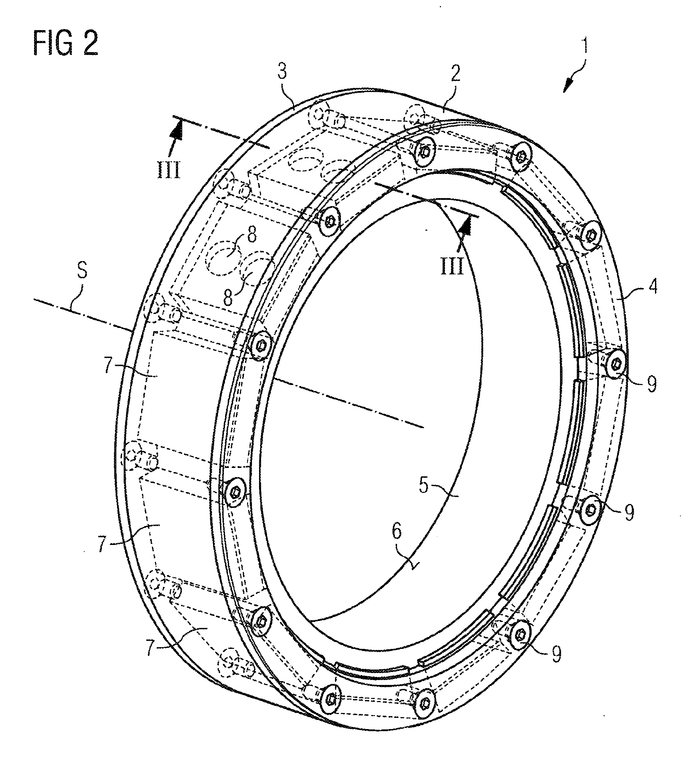

FIG 2 zeigt eine perspektivische Ansicht des Fanglagers 1 mit einer Anzahl von Gleitelementen 7 in Form von Ringsegmenten, die zwischen einen Lageraußenring 2 und einen Lagerinnenring 5 eingebracht sind. Mit dem Bezugszeichen S ist die Symmetrieachse des Fanglagers 1 bezeichnet, die nach Einbau des Fanglagers 1 im Ständergehäuse 21 mit der Drehachse A der elektrischen Maschine 20 übereinstimmt. Das Fanglager 1 ist als Trockenreiblager und folglich öl- und fettfrei ausgeführt.

Gemäß FIG 2 sind 12 Gleitelemente 7 vorhanden. Es könnte jedoch auch eine andere Anzahl von Gleitelementen 7 vorhanden sein, z.B. 2, 3, 8 oder 15 Gleitelemente.

Jedes Gleitelement oder Gleitsegment 7 weist gemäß dem Beispiel der FIG 2 auf der dem Lageraußenring 2 zugewandten Seite zwei Federkammern 8 auf. In diese Federkammern 8 sind vorzugsweise Tellerfedern als Federelemente eingebracht, die nach Zusammenbau des Fanglagers 1 eine radiale (d.h. auf die Drehachse A zu bzw. von der Drehachse A weg gerichtete) Vorspannkraft im Fanglager 1 bewirken. Die Federelemente selbst sind aus Gründen der Übersichtlichkeit nicht dargestellt.

Das gesamte Fanglager 1 wird mittels zweier Abdeckringe 3, 4 fixiert, wobei die Abdeckringe 3, 4 die Gleitelemente 7 seitlich einspannen. Die Abdeckringe 3, 4 sind mittels Befestigungsschrauben 9 am Lageraußenring 2 befestigt. Des Weiteren sind die Lagerringe 2, 5 sowie die Gleitelemente 7 aus Stahl gefertigt.

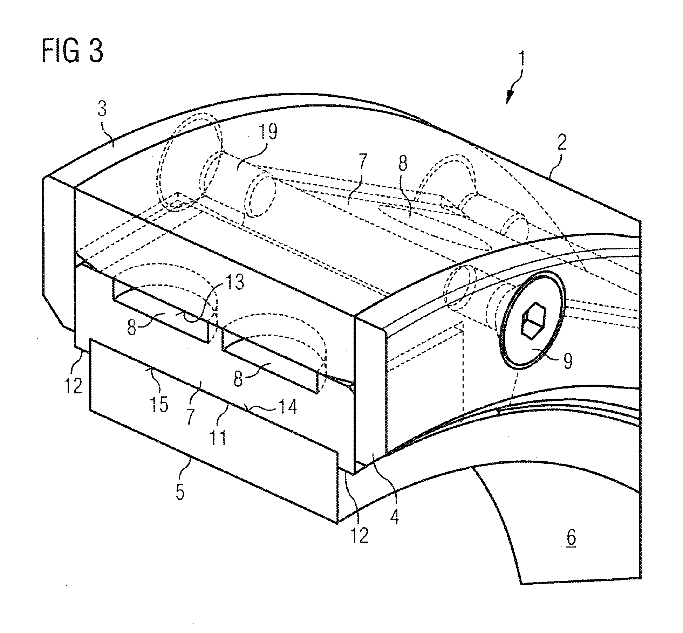

FIG 3 zeigt eine perspektivische Ansicht eines Querschnitts durch das in FIG 2 gezeigte Fanglager 1 entlang der Schnittlinie III im Detail. FIG 3 zeigt die Sandwichstruktur des Fanglagers 1 mit einem zwischen dem Lageraußenring 2 und dem Lagerinnenring 5 eingespannten Gleitelement 7. Der Querschnitt durch das gezeigte Gleitelement 7 zeigt die zwei Federkammern 8 zur Aufnahme der nicht weiter gezeigten Federelemente. Diese Federelemente stützen sich an der Innenfläche 13 des Lageraußenrings 2 ab und bewirken dadurch die radial wirkende Vorspannkraft, die das betreffende Gleitelement 7 spielfrei gegen eine Außenfläche 14 des Lagerinnenrings 5 presst.

Im Beispiel der FIG 3 ist eine dünne Gleitschicht 11 auf die innere Reibfläche 15 des gezeigten Gleitelements 7 aufgebracht. Die Gleitschicht 11 weist typischerweise eine Dicke von weniger als 1 mm auf. Die Materialpaarung Reibschicht 11 und Außenfläche 14 des Lagerinnenrings 5 sind so aufeinander abgestimmt, dass eine Gleitreibungszahl im Bereich von 0,05 bis 0,15 resultiert. Die innere Reibfläche 15 ist geometrisch auf die Außenfläche 14 des Lagerinnenrings 5 abgestimmt, wobei der Lagerinnenring 5 entsprechend dem Beispiel in FIG 3 einen rechteckförmigen Querschnitt aufweist. Demzufolge entspricht die Innenfläche 15 des gezeigten Gleitelements 7 einer Mantelinnenfläche eines Zylinders für einen Teil des Umfangs.

Weiterhin weist jedes Gleitelement 7 zwei in Umfangrichtung des Fanglagers 1 verlaufende Führungsstege 12 auf, die den Lagerinnenring 5 zur Führung seitlich umfassen.

Weiterhin ist gemäß der Erfindung die Innenfläche 6 des Lagerinnenrings 5 und die Außenfläche der nicht weiter gezeigten aufzunehmenden Rotorwelle 23 der elektrischen Maschine 20 so beschaffen, dass im Auffangfall eine Haftreibungszahl von zumindest 0,4 resultiert. Nachdem dem Aufprall der Rotorwelle 23 im Fanglager 1 wird daher der Innenring 5 sofort in Rotation versetzt. Da der Aufprallstoß nicht direkt auf die Reibschicht 11 wirkt, verteilt sich dieser aufgrund des dazwischen liegenden Innenrings 5 auf einen erheblich größeren Bereich der in radialer Richtung des Aufprallstoßes liegenden Reibschicht 11. Bereits nach sehr kurzer Zeit dreht sich der Lagerinnenring 5 unter der Rotorwelle 23 weg. Sind die Innenfläche 6 des Lagerinnenrings 5 sowie die Außenfläche der Rotorwelle 23 aus gehärtetem Stahl gefertigt, so werden diese bei einem Aufprall der Rotorwelle 23 im Fanglager 1 praktisch nicht beschädigt.

## Patentansprüche

1. Fanglager zum Auffangen einer Rotorwelle (23) einer elektrischen Maschine (20), wobei das Fanglager einen Lageraußenring (2) und einen Lagerinnenring (5) aufweist, wobei zwischen Lageraußen- und Lagerinnenring (2, 5) zumindest ein Gleitelement (7) eingebracht ist, welches in radialer Richtung des Fanglagers vorgespannt ist, wobei der Lageraußenring (2) und der Lagerinnenring (5) aus Stahl gefertigt sind und wobei entweder die Innenfläche (13) des Lageraußenrings (2) und eine anliegende äußere Reibfläche des zumindest einen Gleitelements (7) so beschaffen sind, dass eine Gleitreibungszahl im Bereich von 0,05 bis 0,15 resultiert, oder die Außenfläche (14) des Lagerinnenrings (5) und eine anliegende innere Reibfläche (15) des zumindest einen Gleitelements (7) so beschaffen sind, dass eine Gleitreibungszahl im Bereich von 0,05 bis 0,15 resultiert.

2. Fanglager nach Anspruch 1, **dadurch gekennzeichnet, dass** radial wirkende Federelemente zwischen dem zumindest einen Gleitelement (7) und dem Lageraußen- bzw. Lagerinnenring (2,5) zur Aufbringung der Vorspannung eingebracht sind.

3. Fanglager nach Anspruch 1 oder 2, **dadurch gekennzeichnet, dass** das zumindest eine Gleitelement (7) eine oder mehrere Federkammern (8) zur Aufnahme je eines Federelements aufweist.

4. Fanglager nach Anspruch 3, **dadurch gekennzeichnet, dass** das Federelement eine Tellerfeder ist.

5. Fanglager nach einem der vorangegangenen Ansprüche,
**dadurch gekennzeichnet, dass** eine Vielzahl von Gleitelementen (7) in Form von Ringsegmenten zwischen dem Lageraußen- und Lagerinnenring (2,5) des Fanglagers eingebracht sind.

6. Fanglager nach einem der vorangegangenen Ansprüche,
**dadurch gekennzeichnet, dass** das zumindest eine Gleitelement (7) aus Stahl oder aus einer Keramik hergestellt ist.

7. Fanglager nach einem der vorangegangenen Ansprüche,
**dadurch gekennzeichnet, dass** in dem Fall, dass die Innenfläche (13) des Lageraußenrings (2) und eine anliegende äußere Reibfläche des zumindest einen Gleitelements (7) so beschaffen sind, dass eine Gleitreibungszahl im Bereich von 0,05 bis 0,15 resultiert, eine Gleitschicht (11) auf die äußere Reibfläche des zumindest einen Gleitelements (7) und/oder auf die Innenfläche (13) des Lageraußenrings (2) aufgebracht ist.

8. Fanglager nach einem der vorangegangen Ansprüche,
**dadurch gekennzeichnet, dass** in dem Fall, dass die Außenfläche (14) des Lagerinnenrings (5) und eine anliegende innere Reibfläche (15) des zumindest einen Gleitelements (7) so beschaffen sind, dass eine Gleitreibungszahl im Bereich von 0,05 bis 0,15 resultiert, eine Gleitschicht (11) auf die innere Reibfläche (15) des zumindest einen Gleitelements (7) und/oder auf die Außenfläche (14) des Lagerinnenrings (5) aufgebracht ist.

9. Fanglager nach einem der vorangegangenen Ansprüche,
**dadurch gekennzeichnet, dass** die Innenfläche (6) des Lagerinnenrings (5) und die Außenfläche der aufzunehmenden Rotorwelle (23) der elektrischen Maschine (20) so beschaffen sind, dass im Auffangfall eine Haftreibungszahl von zumindest 0,4 resultiert.

10. Fanglager nach einem der vorangegangenen Ansprüche, **dadurch gekennzeichnet, dass** das Fanglager ein Trockenreiblager ist.

11. Elektrische Maschine, insbesondere Turbomaschine, mit zumindest einem Fanglager (1) nach einem der vorangegangenen Ansprüche.

12. Elektrische Maschine nach Anspruch 11, **dadurch gekennzeichnet, dass** die elektrische Maschine (20) zumindest ein Magnetlager (24) zur betriebsmäßigen Lagerung der Rotorwelle (23) aufweist.

13. Elektrische Maschine nach Anspruch 11 oder 12, **dadurch gekennzeichnet, dass** die elektrische Maschine ein Elektromotor oder Generator ist.

14. Elektrische Maschine nach Anspruch 13, **dadurch gekennzeichnet, dass** die elektrische Nennleistung der elektrischen Maschine mindestens 500 kW beträgt.

## Claims

1. Retainer bearing for retaining a rotor shaft (23) of an electric machine (20), with the retainer bearing having a bearing outer ring (2) and a bearing inner ring (5), with at least one sliding element (7), which is prestressed in the radial direction of the retainer bearing, being inserted between the bearing outer ring (2) and the bearing inner ring (5), with the bearing outer ring (2) and the bearing inner ring (5) being produced from steel, and with either the inner surface (13) of the bearing outer ring (2) and an adjoining outer friction surface of the at least one sliding element (7) being provided such that a coefficient of sliding friction in the range of from 0.05 to 0.15 results, or the outer surface (14) of the bearing inner ring (5) and an adjoining inner friction surface (15) of the at least one sliding element (7) being provided such that a coefficient of sliding friction in the range of from 0.05 to 0.15 results.

2. Retainer bearing according to Claim 1, **characterized in that** radially acting spring elements are inserted between the at least one sliding element (7) and the bearing outer ring (2) or bearing inner ring (5) in order to apply the prestress.

3. Retainer bearing according to Claim 1 or 2, **characterized in that** the at least one sliding element (7) has one or more spring chambers (8) for holding a spring element in each case.

4. Retainer bearing according to Claim 3, **characterized in that** the spring element is a plate spring.

5. Retainer bearing according to one of the preceding claims, **characterized in that** a large number of sliding elements (7) in the form of ring segments are inserted between the bearing outer ring (2) and the bearing inner ring (5) of the retainer bearing.

6. Retainer bearing according to one of the preceding claims, **characterized in that** the at least one sliding element (7) is manufactured from steel or from a ceramic.

7. Retainer bearing according to one of the preceding claims, **characterized in that**, in the case of the inner surface (13) of the bearing outer ring (2) and an adjoining outer friction surface of the at least one sliding element (7) are provided such that a coefficient of sliding friction in the range of from 0.05 to 0.15 results, a sliding layer (11) is applied to the outer friction surface of the at least one sliding element (7) and/or to the inner surface (13) of the bearing outer ring (2).

8. Retainer bearing according to one of the preceding claims, **characterized in that**, in the case of the outer surface (14) of the bearing inner ring (5) and an adjoining inner friction surface (15) of the at least one sliding element (7) are provided such that a coefficient of sliding friction in the range of from 0.05 to 0.15 results, a sliding layer (11) is applied to the inner friction surface (15) of the at least one sliding element (7) and/or to the outer surface (14) of the bearing inner ring (5).

9. Retainer bearing according to one of the preceding claims, **characterized in that** the inner surface (6) of the bearing inner ring (5) and the outer surface of the rotor shaft (23) of the electric machine (20), which rotor shaft is to be held, are provided such that a coefficient of static friction of at least 0.4 results in the event of retention.

10. Retainer bearing according to one of the preceding claims, **characterized in that** the retainer bearing is a dry friction bearing.

11. Electric machine, in particular turbomachine, comprising at least one retainer bearing (1) according to one of the preceding claims.

12. Electric machine according to Claim 11, **characterized in that** the electric machine (20) has at least one magnetic bearing (24) for bearing the rotor shaft (23) for operation purposes.

13. Electric machine according to Claim 11 or 12, **characterized in that** the electric machine is an electric motor or generator.

14. Electric machine according to Claim 13, **characterized in that** the rated electrical power of the electric machine is at least 500 kW.

## Revendications

1. Palier d'arrêt pour arrêter un arbre ( 23 ) rotorique d'une machine ( 20 ) électrique, le palier d'arrêt ayant une bague ( 2 ) extérieure de palier et une bague ( 3 ) intérieure de palier, dans lequel entre la bague ( 2 ) extérieure de palier et la bague ( 5 ) intérieure de palier est introduit au moins un élément ( 7 ) de glissement, qui est précontraint dans la direction radiale du palier d'arrêt, la bague ( 2 ) extérieure de palier et la bague ( 5 ) intérieure de palier étant en acier et soit la surface ( 13 ) intérieure de la bague ( 2 ) extérieure de palier et une surface de frottement extérieure s'y appliquant du au moins un élément ( 7 ) de glissement étant telles qu'il s'ensuit un coefficient de frottement de l'ordre de 0,05 à 0,15, soit la surface extérieure ( 14 ) de la bague ( 5 ) intérieure de palier et une surface ( 15 ) intérieure de frottement s'y appliquant du au moins un élément ( 7 ) de glissement étant telles qu'il s'ensuit un indice de frottement de l'ordre de 0,05 à 0,15.

2. Palier d'arrêt suivant la revendication 1, **caractérisé en ce que** des éléments de ressort agissant radialement sont introduits entre au moins un élément ( 7 ) de glissement et la bague ( 2 ) extérieure de palier ou la bague ( 5 ) intérieure de palier pour appliquer la précontrainte.

3. Palier d'arrêt suivant la revendication 1 ou 2, **caractérisé en ce qu'**au moins un élément ( 7 ) de glissement a une ou plusieurs chambres ( 8 ) pour ressort pour le logement de respectivement un élément à ressort.

4. Palier d'arrêt suivant la revendication 3, **caractérisé en ce que** l'élément à ressort est un ressort à disque.

5. Palier d'arrêt suivant l'une des revendications précédentes, **caractérisé en ce qu'**une pluralité d'éléments ( 7 ) de glissement sont introduits sous la forme de segments annulaires entre la bague ( 2 ) extérieure de palier et la bague ( 5 ) intérieure du palier d'arrêt.

6. Procédé suivant l'une des revendications précédentes, **caractérisé en ce qu'**au moins un élément ( 7 ) de glissement est en acier ou en une céramique.

7. Procédé suivant l'une des revendications précédentes, **caractérisé en ce que**, dans le cas où la surface ( 3 ) intérieure de la bague ( 2 ) extérieure de palier et une surface de frottement extérieure s'y appliquant du au moins un élément ( 7 ) de glissement sont telles qu'il s'ensuit un indice de frottement de l'ordre de 0,05 à 0,15, une couche ( 11 ) de glissement est appliquée sur la surface de frottement extérieure du au moins un élément ( 7 ) de glissement et/ou sur la surface ( 3 ) intérieure de la bague ( 2 ) extérieure de palier.

8. Procédé suivant l'une des revendications précédentes, **caractérisé en ce que**, dans le cas où la surface ( 14 ) extérieure de la bague ( 5 ) intérieure de palier et une surface ( 15 ) de frottement intérieure s'y appliquant du au moins un élément ( 7 ) de glissement sont telles qu'il s'ensuit un indice de frottement de l'ordre de l'ordre de 0,05 à 0,15, une couche ( 11 ) de glissement est appliquée sur la surface ( 15 ) intérieure de frottement du au moins un élément ( 7 ) de glissement et/ou sur la surface ( 14 ) extérieure de la bague ( 15 ) intérieure de palier.

9. Procédé suivant l'une des revendications précédentes, **caractérisé en ce que** la surface ( 6 ) intérieure de la bague ( 5 ) intérieure de palier et la surface extérieure de l'arbre ( 23 ) rotorique réception de la machine ( 20 ) électrique sont telles que dans le cas de l'arrêt, il s'ensuit un coefficient de frottement d'au moins 0,4.

10. Procédé suivant l'une des revendications précédentes, **caractérisé en ce que** le palier d'arrêt est un palier de friction à sec.

11. Machine électrique, notamment turbomachine, ayant un palier ( 1 ) d'arrêt suivant l'une des revendications précédentes.

12. Machine électrique suivant la revendication 11, **caractérisé en ce que** la machine ( 20 ) électrique a au moins un palier ( 24 ) magnétique pour la mise en position de fonctionnement de l'arbre ( 23 ) rotorique.

13. Machine électrique suivant la revendication 11 ou 12, **caractérisé en ce que** la machine électrique est un moteur électrique ou une génératrice.

14. Machine électrique suivant la revendication 13, **caractérisé en ce que** la puissance nominale électrique de la machine électrique est d'au moins 500 kW.
